# EUROPÄISCHE PATENTSCHRIFT

(11) **EP 1 461 577 B1**
(45) Veröffentlichungstag und Bekanntmachung des Hinweises auf die Patenterteilung: **22.04.2015**
(21) Anmeldenummer: 02796707.4
(22) Anmeldetag: 20.12.2002
(51) Int. Cl.: F26B 9/10, F26B 25/04

(54) **VORRICHTUNG UND VERFAHREN ZUM TROCKNEN VON TROCKENGUT**
DEVICE AND METHOD FOR DRYING GOODS TO BE DRIED
PROCEDE ET DISPOSITIF DE SECHAGE D'ARTICLES A SECHER

(30) Priorität: 31.12.2001 DE 10164546
(43) Veröffentlichungstag der Anmeldung: 29.09.2004
(73) Patentinhaber: TSP GmbH, 70794 Filderstadt-Bernhausen (DE)
(72) Erfinder: Bux, Markus, 72124 Pliezhausen (DE); Conrad, Tilo, 72622 Nürtingen (DE); Ritterbusch, Steffen, 70563 Stuttgart (DE)
(74) Vertreter: Ehnis, Tobias
(86) Internationale Anmeldenummer: PCT/EP2002/014661
(87) Internationale Veröffentlichungsnummer: WO 2003/056263

(56) Entgegenhaltungen:
- EP-A- 0 232 700
- EP-A- 0 768 286
- DE-A- 4 213 775
- FR-A- 2 637 968
- FR-A- 2 811 981
- GB-A- 604 706
- US-A- 4 326 874

## Beschreibung

Die Erfindung betrifft eine Vorrichtung und ein Verfahren zum Trocknen von Trockengut auf einer Fläche.

Das Trockengut kann Schlamm, insbesondere Klärschlamm oder Gewässerschlamm, tierische oder humane Exkremente, Gülle, Kompost, eine Dispersion bzw. Suspension, insbesondere ein Abwasser, Getreide, Seegras, Hackschnitzel oder ein anderes Schüttgut mit beliebigem Wassergehalt enthalten.

Aus der DE 43 15 321 A1 ist es bekannt, flach auf einer Fläche ausgebreiteten Schlamm mit Unterstützung von Solarstrahlung in einem gewächshausartigen Gebäude zu trocknen. Dabei wird Feuchtigkeit von Luft aufgenommen und abtransportiert. Der Schlamm wird in dem Gebäude gewendet und zum Ende des Gebäudes hin transportiert. Durch das Wenden wird verhindert, dass eine oberste getrocknete Schicht einen Feuchtigkeitstransport von darunterliegenden Schichten an die Luft behindert. Da jeweils nur die oberste Schicht mit der die Feuchtigkeit aufnehmenden Luft in Kontakt steht, wird durch das Wenden eine Erhöhung der Trocknungsleistung auch dadurch bewirkt, dass feuchterer Schlamm als derjenige der obersten Schicht mit der Luft in Kontakt gebracht wird. Zum Wenden und Transportieren kann eine drehbare walzenartige Vorrichtung dienen, die sich über die gesamte Breite der Fläche erstreckt und Werkzeuge aufweist, die beim Drehen der Vorrichtung in den Schlamm eingreifen, diesen wenden und gleichzeitig in Drehrichtung fördern. Die Vorrichtung kann in Halterungen geführt und in Drehrichtung bewegbar sein. Beim Betrieb der Vorrichtung kann der Schlamm allmählich über eine die gesamte Fläche überspannende Förderstrecke zu deren einem Ende hin gefördert werden.

Mit der Vorrichtung ist das Fördern nur senkrecht zur Drehachse längs der Förderstrecke möglich. Daher muss das Gebäude so gebaut sein, dass der zu trocknende Schlamm am Anfang der Förderstrecke eingebracht und am Ende der Förderstrecke entnommen werden kann. Das kann z. B. dadurch gewährleistet werden, dass das Gebäude am Anfang und am Ende der Förderstrecke zugänglich ist. Da sich die Vorrichtung über die gesamte Breite der Fläche erstreckt, ist ein erheblicher Materialaufwand notwendig, um die Vorrichtung mit ausreichender Festigkeit auszustatten, so dass sie weder durchhängen noch sich verwinden kann. Das Problem des Durchhängens wird bei Klärschlamm als Trockengut noch dadurch verstärkt, dass dieser bei Erreichen eines Trockensubstanzgehalts zwischen 15 - 25 % in eine Leimphase übergeht, in der er sehr stark klebt. Dadurch bleibt der Klärschlamm an der Vorrichtung hängen, so dass diese mit zusätzlichem Gewicht belastet wird. Das zusätzliche Gewicht erfordert außerdem zusätzliche Leistung für den Antrieb der Vorrichtung. Darüber hinaus ist die Breite der Fläche durch die statischen Anforderungen an die Vorrichtung limitiert. Da der Schlamm häufig chemisch aggressiv ist, ist es wünschenswert, korrosionsbeständiges Material, wie etwa Edelstahl, für die Vorrichtung zu verwenden. Wegen der Breite der Vorrichtung und der dadurch erforderlichen Materialmenge, ist dies jedoch sehr kostspielig. Wenn die Vorrichtung in Schienen oder seitlich auf einer Mauer geführt wird, sind Unebenheiten der Fläche, wie Senken oder Längswellen, nicht ausgleichbar. Es besteht die Gefahr, dass in den Unebenheiten Schlammreste verbleiben, die nicht gewendet und transportiert werden und dadurch in einen anaeroben Zustand geraten. Das kann zu Fäulnisprozessen und einer damit einhergehenden starken Geruchsbelästigung führen. Aus konstruktiven Gründen ist die Schichthöhe des mit der Vorrichtung zu wendenden Schlamms gering. Ein weiterer konstruktiv bedingter Nachteil besteht darin, dass diese Vorrichtung zu Reparaturzwecken oder zur Anpassung an verschiedene Schlämme nicht leicht und schnell auszutauschen ist. Da sich die Vorrichtung über die gesamte Breite der Fläche erstreckt und nur senkrecht zur Drehachse über die Fläche bewegt werden kann, ist ein gezieltes Bearbeiten einzelner Areale des Trockenguts nicht möglich.

Aus der DE 298 14 380 U1 ist eine Vorrichtung zum Trocknen von Schlamm und/oder den Inhaltsstoffen verschmutzter Flüssigkeiten bekannt. Die Trocknung findet in einem nach oben offenem Behälter statt, in den zum Umwälzen des getrockneten Gutes ein walzenartiges Wendegerät mit Wendeschaufeln eingreifen kann. Der Behälter ist mit einem Transportfahrzeug transportierbar und üblicherweise ein handelsüblicher muldenförmiger Container, wie er beispielsweise aus dem Bauwesen oder zur Abfallbeseitigung bekannt ist. Daraus ergibt sich, dass die Abmessungen der Bodenfläche des Behälters durch das Erfordernis der Transportierbarkeit begrenzt sind. Nachteilig ist dabei, dass die Menge des mit dieser Vorrichtung zu trocknenden Trockenguts verhältnismäßig gering ist. Würde man zur Trocknung größerer Mengen des Trockenguts die Fläche des Behälters vergrößern, wäre der konstruktive Aufwand für eine entsprechende Vergrößerung des walzenartigen Wendegeräts groß. Es wäre ein erheblicher Materialaufwand notwendig, um das Wendegerät mit ausreichender Festigkeit auszustatten, so dass es weder durchhängen noch sich verwinden kann. Die Breite der Fläche wäre durch die statischen Anforderungen an das Wendegerät limitiert.

Aus der EP 0 899 529 A2 ist eine selbstfahrende Wendevorrichtung für auf einem Boden ausgebreitetes Trockengut bekannt, die sich auf stochastisch bestimmten oder vorgegebenen Bahnen durch das Trockengut bewegt und dieses dabei wendet. Die Wendevorrichtung kann z. B. in einer solaren Trocknungsanlage eingesetzt werden.

Die FR 2 637 968 A1 offenbart eine Vorrichtung zum Trocknen eines Trockenguts auf einer Fläche. Dabei sind ein Trocknungsraum, eine Plattform, auf welcher das zu trocknende Gut zum Trocknen aufgebracht wird, und eine Mischvorrichtung vorgesehen, welche in allen Richtungen bewegbar und in der Höhe verstellbar ist. Die Mischvorrichtung kann in eine Rotationsbewegung versetzt werden, deren Geschwindigkeit variabel ist. Die zu trocknende Masse kann auf der Plattform durch jedes geeignete Mittel ausgebreitet werden.

Die GB 604 706 A offenbart ein Verfahren zum Mischen von Abfall und Abwasser oder Klärschlamm. Dabei wird der Abfall in eine Kammer gefüllt und darauf das Abwasser oder der Klärschlamm ausgebracht Der Inhalt der Kammer wird dann mittels einer über einen Träger an einem bewegbaren Wagen befestigten MischVorrichtung durchmischt. Die Mischvorrichtung ist vertikal verstellbar, um ihre Höhe gegenüber dem Boden der Kammer verändern zu können.

Aufgabe der Erfindung ist es, Nachteile nach dem Stand der Technik zu vermeiden. Insbesondere soll eine alternative Vorrichtung und ein alternatives Verfahren zum Trocknen von Trockengut auf einer Fläche mit einem einfach zu handhabenden Werkzeug bereitgestellt werden, die bzw. das es mit verhältnismäßig geringem konstruktiven Aufwand ermöglicht, Trockengut an einer beliebigen Stelle der Fläche zu bearbeiten.

Diese Aufgabe wird durch die Merkmale der Ansprüche 1 und 20 gelöst. Zweckmäßige Ausgestaltungen der Erfindung ergeben sich aus den Merkmalen der Ansprüche 2 bis 19 und 21 bis 39.

Erfindungsgemäß ist eine Vorrichtung zum Trocknen von Trockengut auf einer Fläche vorgesehen, wobei zumindest ein auf der Fläche lastendes oder über der Fläche angeordnetes Werkzeug lösbar mit einem Halter verbunden ist, wobei der Halter in mindestens zwei Koordinaten derart verfahrbar ist, dass das Werkzeug dadurch auf oder über jeden Punkt der Fläche bewegt werden kann, wobei das Werkzeug weniger als halb so breit ist als die kürzeste mögliche durch den Mittelpunkt der Fläche verlaufende Strecke durch die Fläche. Die Vorrichtung weist, vorzugsweise am Werkzeug, einen Sensor zum Erfassen des Abstands zwischen dem Werkzeug und der Fläche auf. Die Koordinaten können Koordinaten eines rechtwinkligen oder krummlinigen Koordinatensystems sein. Bei dem krummlinigen Koordinatensystem kann es sich bspw. um ein Polarkoordinatensystem handeln. Der Halter kann dann z. B. mit veränderbarem Abstand zu einer Achse um diese Achse herum, z. B. auf einer spiralförmigen Linie, verfahren werden. Das Werkzeug lastet auf der Fläche, indem es direkt auf der Fläche oder auf einer, insbesondere unteren, Schicht des Trockenguts aufsitzt. Unter Aufsitzen wird verstanden, dass das Werkzeug zumindest einen Teil seiner Gewichtskraft auf die Fläche oder das Trockengut ausübt. Es kann auch über der Fläche angeordnet sein, Indem es an dem Halter über der Fläche hängt. Unter der Breite des Werkzeugs wird dessen horizontale Erstreckung senkrecht zur anwendungsgemäßen Bewegungsrichtung des Werkzeugs verstanden. Die kürzeste mögliche durch den Mittelpunkt der Fläche verlaufende Strecke durch die Fläche hat bei einer kreisrunden Fläche die Länge des Durchmessers und bei einer rechteckigen Fläche die Länge der Seitenlänge der kürzeren Seite. Unter "lösbar verbunden" wird insbesondere verstanden, dass das Werkzeug von dem Halter schnell und einfach, d.h. ohne aufwändigen Demontageschritt, getrennt werden kann. Eine lösbare Verbindung kann z. B. durch ein Schnellkupplungssystem bereitgestellte werden, wie es bei Ackerschleppern zur Ankopplung landwirtschaftlicher Geräte verwendet wird.

Der Halter kann von mindestens einem Antriebsaggregat angetrieben werden, welches zentral oder dezentral angeordnet sein kann. Die Übertragung der Antriebsleistung kann z. B. über ein Seil, eine Kette, ein in eine Zahnstange eingreifendes Zahnrad, eine Reibrolle oder eine Zapfwelle, wie sie bei Ackerschleppern oder anderen landwirtschaftlichen Maschinen üblich ist, als Übertragungsmittel erfolgen. Der Antrieb kann entweder durch einen den Halter indirekt durch eines der Übertragungsmittel antreibenden stationären Elektromotor oder über mindestens einen direkt an dem Halter angeordneten Elektromotor erfolgen. Statt eines elektrischen kann auch ein pneumatischer Antrieb, etwa durch einen Druckluftmotor, oder ein hydraulischer Antrieb, etwa durch einen Hydraulikmotor, erfolgen. Bei dem Druckluft- und dem Hydraulikmotor kann es sich auch um Linearmotoren handeln.

Das Trockengut kann mittels des Werkzeugs bearbeitet werden, bspw. indem es gewendet, transportiert, verschoben und/oder belüftet wird oder indem ein Zusatz, wie Kalk oder Dünger, auf das Trockengut ausgebracht wird. Mit dem Halter können auch mehrere Werkzeuge verbunden sein. Es ist möglich, mehrere unterschiedlich wirkende Werkzeuge unabhängig voneinander einzusetzen.

Vorteilhafterweise ist eine hohe Festigkeit der Fläche nicht erforderlich. Die Fläche kann sogar nur aus Sand, einer Drainageschicht oder einer, nicht notwendigerweise befahrbaren, Deckschicht bestehen. Dadurch können die Herstellungskosten für die Fläche gering gehalten werden. Bei der erfindungsgemäßen Vorrichtung kann die Fläche auch vollkommen glatt und dadurch gut zu reinigen und sogar geneigt gestaltet sein, weil das Werkzeug mittels des Halters bewegt wird und ein selbstständiger Antrieb des Werkzeugs auf der Fläche nicht notwendig ist.

Ein weiterer Vorteil der Vorrichtung besteht darin, dass sie eine Quer- oder Längsverteilung oder eine kreisförmige Verteilung des Trockenguts auf der Fläche erlaubt. Darüber hinaus kann das Trockengut, z. B. nach Abschluss des Trocknens, mittels des Werkzeugs zusammengeschoben werden. Das Trockengut muss dadurch nicht über die gesamte Breite der Fläche aufgetragen und entnommen werden, sondern kann an einer Stelle der Fläche aufgetragen, mittels des Werkzeugs über die Fläche verteilt und nach dem Trocknen an einer anderen oder derselben Stelle zusammengeschoben und dort entnommen werden. Dadurch kann es ausreichen, wenn das Gebäude an einer beliebigen Stelle zugänglich ist, die sowohl ein Einbringen als auch eine Entnahme des Trockengutes ermöglicht. Das Einbringen und die Entnahme können dadurch kostengünstig gestaltet und einfach automatisiert werden.

Durch die geringe Breite des Werkzeugs ist zum Bewegen des Werkzeugs eine geringere Antriebsleistung erforderlich, als bei einem Werkzeug, welches die gesamte Fläche überspannt. Ein zum Bewegen des Werkzeugs erforderliches Antriebsaggregat kann verhältnismäßig klein dimensioniert sein. Die Vorrichtung ist dadurch kostengünstig. Dadurch, dass weniger Kräfte übertragen werden müssen als bei einem die gesamte Fläche überspannenden Werkzeug, sind die statischen Anforderungen daran geringer und der Halter und die Vorrichtung zum Verfahren des Halters können konstruktiv verhältnismäßig einfach gestaltet werden. Das reduziert die Herstellungskosten der Vorrichtung. Ferner ist zur Herstellung des Werkzeugs weniger Material erforderlich, als bei einem die ganze Fläche überspannenden und insbesondere auch rotierenden Werkzeug, wie es aus der DE 43 15 321 A1 bekannt ist. Dadurch können das Trockengut berührende Teile des Werkzeugs auch aus hochwertigem, korrosionsbeständigem und/oder verschleißfestem Material wie Edelstahl oder einem mit Teflon beschichten Material gefertigt sein, ohne sich stark kostensteigernd auf die gesamte Vorrichtung auszuwirken. Ein weiterer Vorteil besteht darin, dass die Breite der Fläche nicht durch die Bauweise des Werkzeugs beschränkt ist, weil das Werkzeug unabhängig von der Fläche gestaltet werden kann. Dadurch, dass der Halter mit dem Werkzeug lösbar verbunden ist, ist die Vorrichtung sehr wartungs- und reparaturfreundlich, denn das vom Halter gelöste Werkzeug muss nicht vor Ort gewartet oder in Stand gesetzt werden. Darüber hinaus kann das Werkzeug, wenn es defekt ist, durch ein gleiches Werkzeug ersetzt werden, so dass dadurch die Zuverlässigkeit der Vorrichtung erhöht wird. Das Werkzeug kann aber auch durch ein anderes Werkzeug ersetzt werden, wenn das Trockengut anders bearbeitet oder ein Zusatz ausgebracht werden soll. Dadurch ist die Vorrichtung sehr vielfältig und kann auf einfache Weise an unterschiedliches Trockengut und unterschiedliche Schichthöhen des Trockenguts angepasst werden.

Besonders vorteilhaft ist die Kombination einer geringen Breite des Werkzeugs mit dessen Lösbarkeit vom Halter. Dadurch wird eine einfache Handhabung und Wartung sowie ein vielfältiger Einsatz der ganzen Vorrichtung ermöglicht. Das vom Halter gelöste Werkzeug kann mit üblichen Geräten zu deren Handhabung, wie z. B. einem Handkarren, oder bei geringen Abmessungen sogar ohne Geräte gehandhabt werden.

Vorzugsweise ist der Halters derart verfahrbar, dass er im Wesentlichen stets denselben Abstand zur Fläche aufweist. Das ermöglicht eine einfache Konstruktion und Steuerung der Vorrichtung, insbesondere wenn es sich bei den Koordinaten um solche eines rechtwinkligen Koordinatensystems handelt. Die Achsen eines solchen Koordinatensystems verlaufen dann im Wesentlichen parallel zur Fläche.

Es ist vorteilhaft, wenn das Werkzeug weniger als viertel so breit ist als die kürzeste mögliche durch den Mittelpunkt der Flache verlaufende Strecke durch die Fläche. Dadurch ist zur Herstellung des Werkzeugs noch weniger Material und zum Bewegen des Werkzeugs eine noch geringere Antriebsleistung erforderlich als bei einem Werkzeug, das nahezu die halbe Fläche überspannt. Das Antriebsaggregat kann kleiner dimensioniert und die Vorrichtung dadurch kostengünstiger sein.

Bevorzugt ist der Halter mit dem Werkzeug indirekt, insbesondere über mindestens eine Zug- oder Schubvorrichtung, verbunden. Indirekt bedeutet, dass das Werkzeug mit dem Halter durch ein, insbesondere flexibles, Verbindungsmittel verbunden ist. "Flexibel" ist ein Verbindungsmittel, wenn es eine Bewegung des Werkzeugs als Ganzes im Raum in Relation zum Halter zulässt. Unter der Bewegung des Werkzeugs im Raum wird insbesondere nicht eine bloße Rotationsbewegung des Werkzeugs um eine eigene Achse verstanden. Ein flexibles Verbindungsmittel kann z. B. auch eine Stahlstange sein, wenn sie so gelagert ist, dass sie eine Bewegung des Werkzeugs im Verhältnis zum Halter zulässt. Bei der Zugoder Schubvorrichtung kann es sich bspw. um eine Kette oder ein Seil, insbesondere ein Stahlseil, oder eine Stange, insbesondere eine Eisen- oder Zahnstange, handeln. Da das Werkzeug durch die indirekte Verbindung nicht in einer festen Führung geführt wird, sondern auf der Fläche lasten kann, kann das Werkzeug, insbesondere wenn es weniger als viertel so breit ist als die kürzeste mögliche durch den Mittelpunkt der Fläche verlaufende Strecke durch die Fläche, beim Bewegen auf der Fläche Unebenheiten der Fläche folgen. Somit können keine Schlammreste in den Unebenheiten verbleiben, die später zu Fäulnisprozessen führen könnten. Vorzugsweise weist der Halter und/oder das Werkzeug eine Aufnahme für die Zug- oder Schubvorrichtung auf. Die Aufnahme ist so ausgebildet, dass die Verbindung mit der Zug- oder Schubvorrichtung ohne aufwändige Montage- oder Demontageschritte schnell, z. B. durch Ein- bzw. Aushängen, hergestellt bzw. gelöst werden kann. Dadurch werden Reinigungs-, Wartungs- und Austauscharbeiten erleichtert.

Bei einem Ausführungsbeispiel besteht das Werkzeug aus einem Werkzeughalter und mindestens einem damit lösbar verbundenen austauschbaren Werkzeugensatz. Dadurch ist es möglich, das Werkzeug relativ schnell und einfach durch Austausch des Werkzeugeinsatzes an die jeweils gewünschte Verwendung anzupassen. In Fällen, in denen das Werkzeug relativ schwer sein muss, etwa um bei schwerem und zähem Trockengut, wie Klärschlamm, auf der Fläche zu bleiben, kann die Handhabung deutlich vereinfacht werden, indem nur der Werkzeughalter schwer ausgebildet ist. Zur Anpassung an eine andere Verwendung muss dann nur der Werkzeugeinsatz ausgewechselt werden und nicht das insgesamt schwere Werkzeug. Um eine Anpassung des Gewichts des Werkzeugs an das jeweilige Trockengut zu ermöglichen, kann das Werkzeug oder der Werkzeughalter auch einen Ballastbehälter aufweisen, in den bei Bedarf z. B. Sand oder Wasser eingefüllt werden kann. Der Werkzeughalter kann so ausgebildet sein, dass daran als Werkzeugeinsatz herkömmliche landwirtschaftliche Standardgeräte für einen Anbau an einem Ackerschlepper, wie ein Pflug, eine Egge, ein Kalk- oder Düngerstreuer, ein Räumschild, eine Schaufel oder eine Fräse, angebracht werden können. An dem Werkzeughalter können ein Aushubmechanismus und eine Werkzeugkopplung vorgesehen sein, wie es bei landwirtschaftlichen Maschinen üblich ist, z. B. mit einer Dreipunkthydraulik mit Schnellkupplungssystem.

Bevorzugt weist das Werkzeug mindestens eine funktionelle Komponente, insbesondere einen Werkzeugeinsatz, zum Wenden, Transportieren, Verschieben, Belüften, Beheizen und/oder Hygienisieren des Trockenguts, zum Aussondern von Fremdstoffen, zum Ausbringen eines Zusatzes und/oder zum Reinigen der Fläche auf. Bei der funktionellen Komponente kann es sich um einen Pflug, eine Hackwalze, eine Förderschnecke, ein spiralbohrerartiges Werkzeug, ein Räumschild, einen Rechen oder eine Schaufel handeln. Die Förderschnecke und das spiralbohrerartige Werkzeug können senkrecht zur Fläche verlaufende Drehachsen aufweisen. Damit ist es beim Trocknen von Trockengut mit großer Schichthöhe möglich, das Trockengut auch vertikal umzusetzen und somit Trockengut von unteren Schichten an die Oberfläche zu fördern. Das verbessert das Trocknen und ermöglicht ein Belüften des Trockenguts. Besonders effektiv ist die parallele Anordnung mehrerer solcher Förderschnecken oder spiralbohrerartigen Werkzeuge. Das Beheizen kann direkt durch das, bspw. elektrisch oder mittels erwärmtem Öl oder Wasser beheizte, Werkzeug, oder indirekt, bspw. durch ein Warmluftgebläse, einen Heizstrahler, eine UV-Lampe oder einen Mikrowellensender, erfolgen. Beim Belüften wird Luft in das Trockengut eingebracht. Das kann durch ein mechanisches Auflockern des Trockenguts, z. B. mittels eines Pflugs als Werkzeug erfolgen. Luft kann aber auch mittels eines Gebläses oder mittels Pressluft aus einem Vorratsbehälter am bzw. im Werkzeug oder aus einer Versorgungsleitung in das Trockengut eingebracht werden. Bei der Versorgungsleitung kann es sich auch um einen Versorgungsschlauch handeln. Das Belüften kann der Verbesserung des Trocknens oder einem aeroben Stabilisieren von organischem Trockengut dienen. Bei der funktionellen Komponente zum Ausbringen eines Zusatzes kann es sich bspw. um einen Streuer, insbesondere einen Schneckenstreuer, handeln, mit dem der Zusatz aus einem am oder im Werkzeug angeordneten Vorratsbehälter auf das Trockengut gestreut wird. Der Zusatz kann dem Werkzeug auch über eine Versorgungsleitung bzw. einen Versorgungsschlauch zugeführt werden. Der Zusatz kann flüssig oder fest sein. Mögliche Zusätze sind z. B. Dünger, eine Kohlenstoffquelle, wie z. B. Strohhäcksel, gebrannter oder gelöschter Kalk oder sonstige, insbesondere zum Hygienisieren geeignete, Zusatzstoffe. Das Ausbringen kann gezielt an bestimmten Stellen der Fläche in unterschiedlichem Ausmaß erfolgen. Das Hygienisieren kann z. B. durch Erwärmen oder Bestrahlen mit Mikrowellen, UV-Strahlung oder radioaktiver Strahlung erfolgen. Die radioaktive Strahlung kann dabei von einem radioaktiven Isotop als Strahlungsquelle ausgehen. Das Aussondern der Fremdstoffe kann über besondere Eigenschaften der Fremdstoffe, wie deren Größe oder deren Magnetismus, erfolgen. Die funktionelle Komponente zum Aussondern der Fremdstoffe kann z. B. ein Rechen sein, mit dem grobe Verunreinigungen aus Klärschlamm ausgesondert werden, oder auch ein starker Magnet, mit dem z. B. Eisennägel aus Hackschnitzeln ausgesondert werden. Bei der funktionellen Komponente zum Reinigen der Fläche kann es sich um Düsen zum Ausbringen von Wasser oder Reinigungsmittel oder um einen Hochdruckreiniger handeln. Das Werkzeug kann auch mehrere funktionelle Komponenten aufweisen, die z. B. durch Anheben außer Funktion oder durch Senken in Funktion gesetzt werden, wie dies auch bei Ackerschleppern üblich ist. Unterschiedliche funktionelle Komponenten können auch auf verschiedenen Seiten des Werkzeugs angeordnet sein, so dass die Richtung, in der das Werkzeug bewegt wird über die Wirkung des Werkzeugs, z. B. Transport bzw. Verschieben oder Wenden des Trockenguts, entscheidet. Das Werkzeug kann auch um eine senkrecht zur Fläche verlaufende Achse dreh- oder schwenkbar sein. Bei einem solchen Werkzeug kann es sich z. B. um ein schwenkbares Räumschild oder eine schwenkbare Einrichtung zum Wenden des Trockenguts handeln.

In einer bevorzugten Ausführungsform weist die Vorrichtung, vorzugsweise am Werkzeug, einen Sensor zum Erfassen der genauen Position des Werkzeugs, der Schichthöhe des Trockenguts oder einer Eigenschaft des Trockenguts auf. Der Sensor zum Erfassen des Abstands zwischen dem Werkzeug und der Fläche kann ein Rad oder ein Scheibensech zum Abtasten der Fläche aufweisen. Der Abstand kann auch mittels Ultraschall, Radar, Infrarotstrahlung, einem Laserstrahl oder anderen gebräuchlichen Mitteln zur Entfernungsmessung bestimmt werden. Dabei ist auch eine indirekte Messung des Abstands zur Fläche möglich, etwa indem der Abstand des Werkzeugs zu einer Decke ermittelt wird. Die genaue Position des Werkzeugs kann z. B. mittels eines Satellitennavigationssystems oder Anhand von Bezugspunkten auf oder außerhalb der Fläche erfasst werden. Die Eigenschaft des Trockenguts kann z. B. eine physikalische, chemische oder biologische Eigenschaft, wie die Temperatur, der pH-Wert oder der Gehalt an Wasser, Sauerstoff, Nitrat, Keimen oder einem anderen chemischen oder biologischen Bestandteil sein. Durch das Erfassen der Eigenschaften des Trockenguts an verschiedenen Stellen der Fläche kann das Trockengut auf der Fläche hinsichtlich dieser Eigenschaften kartiert und in Abhängigkeit der Eigenschaften an einzelnen Stellen besonders bearbeitet werden.

Bevorzugt weist die Vorrichtung mindestens einen Portalwagen, eine verfahrbare Brücke oder einen Rundläufer auf, an welchem bzw. welcher der Halter verfahrbar angeordnet ist. Bei dem Rundläufer handelt es sich um einen um eine Achse drehbaren Ausleger oder eine um eine Achse drehbare Brücke. Die für ein Verfahren des Portalwagen, der verfahrbaren Brücke oder des Rundläufers erforderliche Antriebsleistung kann in gleicher Weise bereitgestellt werden, wie für den Halter. Die Antriebsleistung kann auch über die gleichen Übertragungsmittel übertragen werden, die auch zum Antrieb des Halters dienen können. Vorzugsweise weist der Portalwagen mindestens einen Läufer und einen, insbesondere im Abstand zur Fläche verstellbaren, den Halter tragenden Portalträger auf. Das Verstellen des Abstands kann dabei durch eine Vorrichtung am Läufer oder eine Vorrichtung am Portalträger erfolgen. Es ermöglicht indirekt den Abstand des Werkzeugs zur Fläche zu verstellen. Der Portalträger und ein den Halter tragender Teil der Brücke oder des Rundläufers können in der Art eines Kranauslegers gebaut sein. Es ist sogar möglich einen, bis zu einer Länge von 100 Metern serienmäßig kommerziell erhältlichen, Kranausleger dafür zu verwenden. Da keine Rotationssteifigkeit des Portalträgers erforderlich ist, kann die Konstruktion verhältnismäßig einfach gestaltet sein und das Überspannen sehr breiter Flächen erlauben. Als Halter kann ein aus dem Kranbau bekannter am Kranausleger verfahrbarer Laufwagen verwendet werden. Der Portalwagen kann, insbesondere seitlich oder oberhalb der Fläche, derart geführt sein, dass ein den Halter tragender Teil des Portalwagens, insbesondere der Portalträger, oberhalb der Fläche verfahrbar ist. Das Führen kann an mindestens einer Stelle, insbesondere einem in Bezug auf die möglichen Bewegungsrichtungen seitlichen Ende, des Portalwagens, vorzugsweise durch die Führung des Läufers, erfolgen. Es kann an Teilen einer Umrandung der Fläche, etwa an einer auf einer Mauer angeordneten Schiene, an einer auf dem Boden angeordneten Schiene oder Bahnbegrenzung oder im Deckenbereich eines die Fläche umgebenden Gebäudes erfolgen. Bei einer auf dem Boden angeordneten Schiene oder Bahnbegrenzung weist der Portalwagen ausreichend hohe Läufer auf, um den Portalträger oberhalb der Fläche und oberhalb von darauf zu trocknendem Trockengut verfahren zu können.

Der Abstand zwischen dem Werkzeug und der Fläche wird mittels einer an dem Werkzeug oder dem Halter angeordneten Einrichtung oder einer Einrichtung zum Anheben des Werkzeugs in Abhängigkeit des von dem Sensor erfassten Abstands zwischen dem Werkzeug und der Fläche verändert. Die an dem Werkzeug angeordnete Einrichtung kann z. B. aus höhenverstellbaren Rädern bestehen, mit denen das Werkzeug hoch- oder tiefgestellt werden kann. Die Einrichtung zum Anheben des Werkzeugs kann z. B. eine Seilrolle oder Seilwinde am Halter zum Verkürzen eines Seilabstands zwischen Halter und Werkzeug sein, die wie eine Einrichtung zum Anheben von Lasten bei einem Kran konstruiert sein kann. Es kann sich dabei auch um eine hydraulische Vorrichtung am Halter handeln, wie etwa um eine aus Ackerschleppern bekannte hydraulisch betätigte Dreipunktaufhängung. Auch ein Anheben des gesamten Halters, des den Halter tragenden Portalwagens oder einer Schiene des Portalwagens ist möglich. Das kann gleichfalls hydraulisch, insbesondere mittels einer hydraulisch betätigten Dreipunktaufhängung, erfolgen. Durch das Verändern des Abstands zwischen dem Werkzeug und der Fläche kann das Werkzeug z. B. so angehoben oder hochgestellt werden, dass es an einer anderen Stelle der Fläche positioniert oder bspw. zum Austausch eines Werkzeugeinsatzes an den Rand der Fläche bewegt werden kann, ohne dass dabei das Trockengut bearbeitet wird. Weiterhin ist es zum Aufstreuen oder Aufsprühen eines Zusatzes auf das Trockengut mittels des Werkzeugs möglich, dieses über das Trockengut hinweg zu bewegen. Auch zu Reinigungs-, Wartungsoder Austauscharbeiten ist es vorteilhaft, wenn das Werkzeug angehoben oder hochgestellt werden kann. Beim Transportieren bzw. Verschieben des Trockenguts erlaubt die Möglichkeit der Veränderung des Abstands zwischen dem Werkzeug und der Fläche eine definierte Aufschichtung des Trockenguts oder auch eine flächige Verteilung einer Schüttung des Trockenguts. Weiterhin ermöglicht das Verändern des Abstands zwischen dem Werkzeug bzw. dem Werkzeugeinsatz und der Fläche das Berücksichtigen von Unebenheiten der Fläche.

Die Vorrichtung kann verschiedene Werkzeuge aufweisen, mit denen sich der Halter selbstständig wahlweise verbinden kann, verschiedene Werkzeugeinsätze aufweisen, mit denen sich der Werkzeughalter selbstständig wahlweise verbinden kann, oder einen Vorrat mindestens eines Zusatzes aufweisen, aus dem das Werkzeug den Zusatz selbstständig aufnehmen kann. Selbstständig bedeutet, dass kein manuelles Eingreifen an dem Werkzeug bzw. Werkzeughalter oder - einsatz oder dem Zusatz erforderlich ist. Es ist jedoch nicht ausgeschlossen, dass die Steuerung der Vorrichtung beim selbstständigen Verbinden bzw. Aufnehmen des Zusatzes manuell erfolgt. Der Zusatz kann in den am oder im Werkzeug angeordneten Vorratsbehälter aufgenommen werden.

Besonders vorteilhaft ist es, wenn die erfindungsgemäße Vorrichtung in einem, insbesondere den Treibhauseffekt ausnutzenden, Gebäude angeordnet ist. Dadurch ist es möglich, das Trocknen unter definierten und optimierten Bedingungen unter Ausschluss negativer Witterungseinflüsse, wie Regen oder Schnee, durchzuführen. Ein den Treibhauseffekt ausnutzendes Gebäude kann ein Gebäude in der Art eines Gewächshauses sein, wobei hierunter auch eine zeltartige Konstruktion aus Gestänge und lichtdurchlässiger Folie zu verstehen ist.

Die Fläche und/oder ein die Fläche umfassender Raum über der Fläche kann in, insbesondere unterschiedlich klimatisierbare, Kompartimente unterteilt sein. Das Unterteilen kann durch mindestens eine Mauer oder eine Schürze, z. B. aus einem Kunststoff, erfolgen. Dadurch kann eine getrennte Klimatisierung und/oder Bearbeitung von Trockengut in bestimmten Trocknungsphasen erfolgen, die für die jeweilige Trocknungsphase optimal ist. So kann z. B. eine Vor- von einer Haupt- und einer Endtrocknung getrennt werden. Vorzugsweise kann der Portalwagen, die verfahrbare Brücke oder der Rundläufer, insbesondere zusammen mit dem mit dem Halter verbundenen Werkzeug, über alle Kompartimente hinweg verfahren werden. Das Werkzeug kann so für mehrere Kompartimente verwendet werden. Das wird insbesondere durch die Möglichkeit des Anhebens des Werkzeugs erleichtert, da das Werkzeug so bspw. über eine Mauer zur Unterteilung der Fläche gehoben werden kann. Alternativ kann die Vorrichtung auch je Kompartiment einen Portalwagen aufweisen. Bevorzugt ist der Halter von dem Portalwagen eines Kompartiments auf den Portalwagen eines anderen Kompartiments verfahrbar. Das kann z. B. dadurch erreicht werden, dass der Halter in dem Portalwagen in einer Schiene geführt ist. Die Portalwagen benachbarter Kompartimente können dann so positioniert werden, dass die Schiene des einen Portalwagens in der Schiene des benachbarten Portalwagens fluchtet und der Abstand zwischen den Schienen so gering ist, dass der Halter von einem auf den anderen Portalwagen verfahren werden kann. Dadurch kann das Trockengut in benachbarten Kompartimenten mittels nur eines Halters und dem damit verbundenen Werkzeug bearbeitet werden.

Gegenstand der Erfindung ist weiterhin ein Verfahren zum Trocknen von Trockengut auf einer Fläche, wobei das Trockengut mittels zumindest eines auf der Fläche lastenden oder über der Fläche angeordneten Werkzeugs bearbeitet wird, wobei das Werkzeug durch einen damit lösbar verbundenen Halter bewegt wird, welcher in mindestens zwei Koordinaten derart verfahrbar ist, dass das Werkzeug dadurch auf oder über jeden Punkt der Fläche bewegt werden kann, wobei das Werkzeug weniger als halb so breit ist als die kürzeste mögliche durch den Mittelpunkt der Fläche verlaufende Strecke durch die Fläche. Vorzugsweise weist der Halter beim Verfahren des Halters im Wesentlichen stets denselben Abstand zur Fläche auf. Es ist vorteilhaft, wenn das Werkzeug weniger als viertel so breit ist als die kürzeste mögliche durch den Mittelpunkt der Fläche verlaufende Strecke durch die Fläche. Das Werkzeug kann mittels des Halters indirekt, insbesondere durch Schieben oder Ziehen, bewegt werden. Bevorzugt weist der Halter und/oder das Werkzeug eine Aufnahme für eine Zug- oder Schubvorrichtung auf.

Vorzugsweise besteht das Werkzeug aus einem Werkzeughalter und mindestens einem damit lösbar verbundenen austauschbaren Werkzeugeinsatz. Das Trockengut wird mittels des Werkzeugs bearbeitet, indem es mittels mindestens einer funktionellen Komponente des Werkzeugs, insbesondere einem Werkzeugeinsatz, transportiert oder verschoben wird. Es kann damit auch gewendet, belüftet, von Fremdstoffen befreit, beheizt und/oder, insbesondere durch Erwärmen oder Bestrahlung mit Mikrowellen, UV-Strahlung oder radioaktiver Strahlung, hygienisiert werden. Es kann auch mittels mindestens einer funktionellen Komponente des Werkzeugs ein Zusatz ausgebracht werden. Das Werkzeug kann auch um eine senkrecht zur Fläche verlaufende Achse gedreht oder geschwenkt werden. Nach einer Ausgestaltung wird der Abstand zwischen dem Werkzeug und der Fläche, die genaue Position des Werkzeugs, die Schichthöhe des Trockenguts oder eine Eigenschaft des Trockenguts mittels eines, insbesondere an dem Werkzeug vorhandenen, Sensors erfasst. Das Trockengut kann dann in Abhängigkeit von mit dem Sensor erfassten Daten bearbeitet werden. So ist es z. B. möglich, das Trockengut in bestimmten schneller trocknenden Bereichen häufiger oder seltener zu wenden oder beim Erfassen eines an einer bestimmten Stelle beginnenden Fäulnisprozesses dort zu belüften. Bei einer vorteilhaften Ausgestaltung wird der Halter an mindestens einem Portalwagen, einer verfahrbaren Brücke oder einem Rundläufer verfahren. Bevorzugt weist der Portalwagen einen, insbesondere im Abstand zur Fläche verstellbaren, Portalträger auf, von welchem der Halter getragen wird. Der Portalträger ist zusammen mit mindestens einem Läufer Bestandteil des Portalwagens. Der Portalwagen kann, insbesondere seitlich oder oberhalb der Fläche, derart geführt werden, dass ein den Halter tragender Teil des Portalwagens, insbesondere der Portalträger, oberhalb der Fläche verfahrbar ist.

Der Abstand zwischen dem Werkzeug und der Fläche wird, insbesondere mittels einer an dem Werkzeug oder dem Halter angeordneten Einrichtung oder einer Einrichtung zum Anheben des Werkzeugs, verändert, um das Trockengut, insbesondere nach dem Trocknen, aufzuschichten oder eine Schüttung des Trockenguts gleichmäßig auf der Fläche zu verteilen. Bei einer Ausgestaltung kann sich der Halter selbstständig wahlweise mit verschiedenen Werkzeugen oder der Werkzeughalter selbstständig wahlwelse mit verschiedenen Werkzeugeinsätzen verbinden. Es ist auch möglich, dass das Werkzeug selbstständig einen Zusatz aus einem Vorrat mindestens eines Zusatzes aufnimmt.

Vorteilhafterweise wird das Verfahren in einem, insbesondere den Treibhauseffekt ausnutzenden, Gebäude durchgeführt. Vorzugsweise ist die Fläche und/oder ein die Fläche umfassender Raum über der Fläche in, insbesondere unterschiedlich klimatisierbare, Kompartimente unterteilt. Das Trockengut in mehreren Kompartimenten kann mittels des Werkzeugs bearbeitet werden. Es ist auch möglich, dass je Kompartiment ein Portalwagen verwendet wird. Bei einer vorteilhaften Ausgestaltung kann der Halter von dem Portalwagen eines Kompartiments auf den Portalwagen eines anderen Kompartiments verfahren werden.

Nachfolgend wird ein Ausführungsbeispiel der Erfindung anhand der Figuren erläutert. Es zeigen
- Fig. 1a, b: eine schematische Darstellung einer erfindungsgemäßen Vorrichtung,
- Fig. 2a, b: eine schematische Darstellung einer alternativen Ausführungsform der erfindungsgemäßen Vorrichtung,
- Fig. 3a, b: eine schematische Darstellung einer Hackwalze als Werkzeug zum Wenden des Trockenguts,
- Fig. 4a, b: eine schematische Darstellung eines Räumschilds als Werkzeug und
- Fig. 5a, b: eine schematische Darstellung einer Schaufel als Werkzeug.

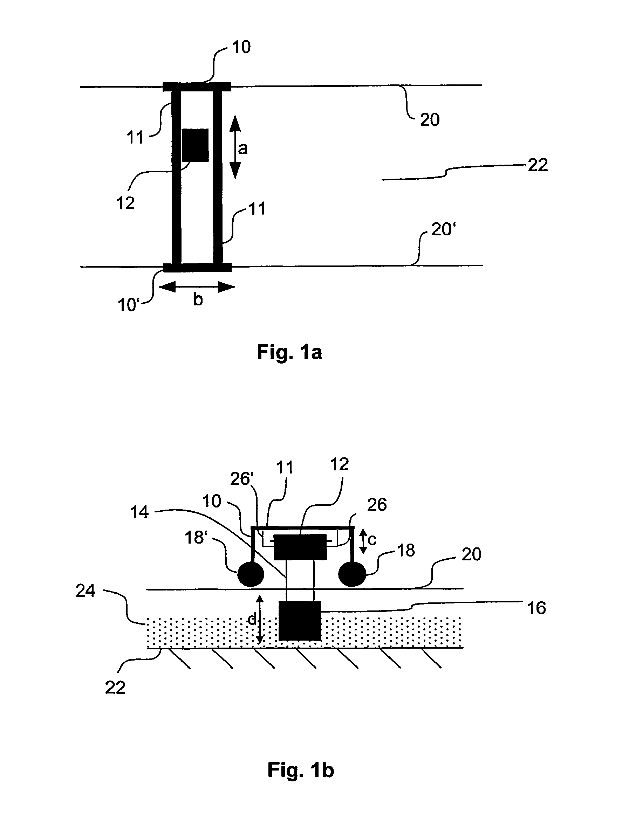

Fig. 1a zeigt schematisch eine Draufsicht, Fig. 1b eine Seitenansicht eines aus zwei Läufern 10, 10' und einem Portalträger 11 bestehenden Portalwagens mit einem Halter 12 und einem damit über Drahtseile 14 verbundenen Werkzeug 16. Der Portalträger 11 weist in der Draufsicht die Form eines rechteckigen Rahmens auf. Die Läufer 10, 10' sind über Laufräder 18, 18' in zwei ersten Schienen 20, 20' geführt. Die ersten Schienen 20, 20' verlaufen jeweils seitlich der Fläche 22. Der Portalwagen wird über die Laufräder 18, 18' angetrieben. Dabei sind die Materialien für die Laufräder 18 und die ersten Schienen 20, 20' vorteilhafterweise so gewählt, dass der Reibungskoeffizient zwischen diesen Materialien hoch ist. Der Portalwagen und damit der Halter 12 kann längs der Fläche 22 in der durch den Doppelpfeil b angezeigten Richtung in der ersten Koordinate verfahren werden. Der Portalwagen weist zwei zweite Schienen 26, 26' auf, in welchen der Halter 12 geführt ist. Der Halter 12 verfügt über einen Kettenantrieb. Der Halter 12 kann in der durch den Doppelpfeil a angezeigten Richtung in der zweiten Koordinate verfahren werden. Das Werkzeug 16 kann so an jeden Ort der Fläche 22 verfahren werden. Die Position des Halters 12 über der Fläche 22 kann dabei jederzeit durch an dem Halter 12 angeordnete Sensoren bestimmt werden. Die Verbindung des Werkzeugs 16 mit dem Halter 12 über Drahtseile 14 ermöglicht eine durch den Doppelpfeil d angezeigte Höhenverstellung des Werkzeugs 16. Weiterhin ist der Portalträger 11 an den Läufern 10, 10' in der durch den Doppelpfeil c angezeigten Weise höhenverstellbar. Die Bewegungen des Werkzeugs 16 werden von einer Mikroprozessorsteuerung derart gesteuert, dass ein Transport des Trockenguts 24 auf der Fläche 22 in jede Richtung möglich ist. Dadurch ist es möglich, das nur in Fig. 1b dargestellte Trockengut 24 an nur einer Stelle der Fläche 22 einzutragen und an derselben oder einer beliebigen anderen Stelle nach der Trocknung zu entnehmen. Die relative Position des Werkzeugs 16 zum Halter 12 wird über Sensoren erfasst. Durch weitere Sensoren wird der Abstand zwischen Halter 12 bzw. Werkzeug 16 und Trockengut 24 sowie der Wassergehalt des Trockenguts 24 erfasst. Die erfassten Daten werden von der Mikroprozessorsteuerung verarbeitet und zur Optimierung der Bearbeitung des Trockenguts 24 und des Trocknungsvorgangs eingesetzt.

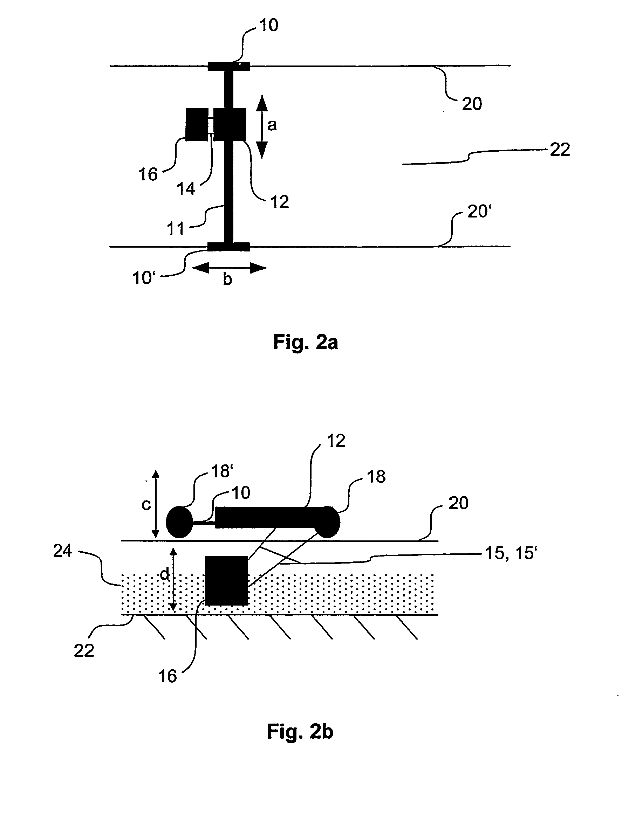

Fig. 2a zeigt schematisch eine Draufsicht, Fig. 2b eine Seitenansicht einer alternativen Ausführungsform der erfindungsgemäßen Vorrichtung. Im Unterschied zu der in den Fig. 1a und 1b dargestellten Vorrichtung weist hier der Portalträger 11 keine Rahmenform sondern die Form eines einfachen Querträgers auf. Der Halter 12 kann mittels einer Hydraulik in der durch den Doppelpfeil c angezeigten Weise angehoben werden. Die Möglichkeit das Werkzeug 16 anzuheben wird durch den Doppelpfeil d angezeigt. Das Anheben erfolgt durch die Eisenstangen 15, 15', die von einer bei Ackerschleppern üblichen Dreipunkthydraulik betätigt werden.

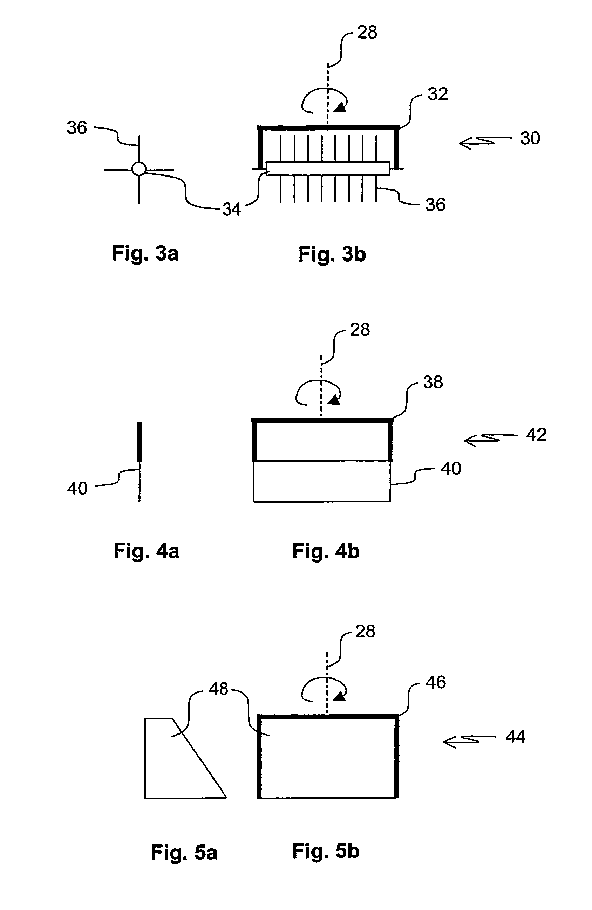

In den Fig. 3a, 3b, 4a, 4b, 5a und 5b sind schematisch Werkzeuge 16 dargestellt. Diese Werkzeuge 16 sind um eine senkrecht zur Fläche 22 verlaufende Achse 28 dreh- oder schwenkbar. Fig. 3b zeigt schematisch eine Vorderansicht einer als Werkzeug 16 zum Wenden des Trockenguts einsetzbaren Hackwalze 30. Die Hackwalze 30 besteht aus einem Rahmen 32 in dem eine in Fig. 3a auch in einer Seitenansicht dargestellte Hackwelle 34 mit Harken 36 drehbar gelagert ist.

Fig. 4b zeigt schematisch eine Vorderansicht eines Raumschilds 42, welches einen Rahmen 38 und einen daran befestigten Schieber 40 aufweist. In Fig. 4a ist der Schieber 40 auch in einer Seitenansicht dargestellt. In Fig. 5b ist schematisch eine Vorderansicht eines Schaufelwerkzeugs 44 dargestellt. Es besteht aus einer, in Fig. 5a auch in einer Seitenansicht dargestellten, Schaufel 48, welche an einem Rahmen 46 befestigt ist.

## Patentansprüche

1. Vorrichtung zum Trocknen von Trockengut (24) auf einer Fläche (22) der Vorrichtung, wobei zumindest ein auf der Fläche (22) lastendes oder über der Fläche (22) angeordnetes Werkzeug (16) lösbar mit einem Halter (12) verbunden ist, wobei der Halter (12) in mindestens zwei Koordinaten derart verfahrbar ist, dass das Werkzeug (16) dadurch auf oder über jeden Punkt der Fläche (22) bewegt werden kann, wobei das Werkzeug (16) weniger als halb so breit ist als die kürzeste mögliche durch den Mittelpunkt der Fläche (22) verlaufende Strecke durch die Fläche (22), wobei die Vorrichtung einen Sensor zum Erfassen des Abstands zwischen dem Werkzeug (16) und der Fläche (22) aufweist, wobei der Abstand zwischen dem Werkzeug (16) und der Fläche (22) mittels einer an dem Werkzeug (16) oder dem Halter (12) angeordneten Einrichtung oder einer Einrichtung zum Anheben des Werkzeugs (16) in Abhängigkeit des von dem Sensor erfassten Abstands zwischen dem Werkzeug (16) und der Fläche (22) verändert wird.

2. Vorrichtung nach Anspruch 1, wobei das Werkzeug (16) aus einem Werkzeughalter und mindestens einem damit lösbar verbundenen austauschbaren Werkzeugeinsatz besteht.

3. Vorrichtung nach Anspruch 2, wobei der Abstand zwischen dem Werkzeugeinsatz und der Fläche (22), insbesondere mittels einer Einrichtung an dem Werkzeughalter, verändert werden kann.

4. Vorrichtung nach Anspruch 2 oder 3, wobei an dem Werkzeughalter ein Aushubmechanismus und eine Werkzeugkopplung vorgesehen sind.

5. Vorrichtung nach einem der vorhergehenden Ansprüche, wobei der Halter (12) derart verfahrbar ist, dass er im Wesentlichen stets denselben Abstand zur Fläche (22) aufweist.

6. Vorrichtung nach einem der vorhergehenden Ansprüche, wobei das Werkzeug (16) weniger als viertel so breit ist als die kürzeste mögliche durch den Mittelpunkt der Fläche (22) verlaufende Strecke durch die Fläche (22).

7. Vorrichtung nach einem der vorhergehenden Ansprüche, wobei der Halter (12) mit dem Werkzeug (16) indirekt, insbesondere über mindestens eine Zug- oder Schubvorrichtung, verbunden ist.

8. Vorrichtung nach einem der vorhergehenden Ansprüche, wobei der Halter (12) und/oder das Werkzeug (16) eine Aufnahme für die Zug- oder Schubvorrichtung aufweist.

9. Vorrichtung nach einem der vorhergehenden Ansprüche, wobei das Werkzeug (16) mindestens eine funktionelle Komponente, insbesondere einen Werkzeugeinsatz, zum Wenden, Transportieren, Verschieben, Belüften, Beheizen und/oder Hygienisieren des Trockenguts (24), zum Aussondern von Fremdstoffen, zum Ausbringen eines Zusatzes und/oder zum Reinigen der Fläche (22) aufweist.

10. Vorrichtung nach einem der vorhergehenden Ansprüche, wobei das Werkzeug (16) um eine senkrecht zur Fläche (22) verlaufende Achse (28) dreh- oder schwenkbar ist.

11. Vorrichtung nach einem der vorhergehenden Ansprüche, wobei die Vorrichtung den Sensor am Werkzeug (16) aufweist.

12. Vorrichtung nach einem der vorhergehenden Ansprüche, wobei die Vorrichtung mindestens einen Portalwagen, eine verfahrbare Brücke oder einen Rundläufer aufweist, an welchem bzw. welcher der Halter (12) verfahrbar angeordnet ist.

13. Vorrichtung nach Anspruch 12, wobei der Portalwagen mindestens einen Läufer (10, 10') und einen, insbesondere im Abstand zur Fläche (22) verstellbaren, den Halter (12) tragenden Portalträger (11) aufweist.

14. Vorrichtung nach Anspruch 12 oder 13, wobei der Portalwagen, insbesondere seitlich oder oberhalb der Fläche (22), derart geführt ist, dass ein den Halter (12) tragender Teil des Portalwagens, insbesondere der Portalträger (11), oberhalb der Fläche (22) verfahrbar ist.

15. Vorrichtung nach einem der vorhergehenden Ansprüche, wobei die Vorrichtung verschiedene Werkzeuge (16) aufweist, mit denen sich der Halter (12) selbstständig wahlweise verbinden kann, verschiedene Werkzeugeinsätze aufweist, mit denen sich der Werkzeughalter selbstständig wahlweise verbinden kann, oder einen Vorrat mindestens eines Zusatzes aufweist, aus dem das Werkzeug (16) den Zusatz selbstständig aufnehmen kann.

16. Vorrichtung nach einem der vorhergehenden Ansprüche, wobei die Vorrichtung in einem, insbesondere den Treibhauseffekt ausnutzenden, Gebäude angeordnet ist.

17. Vorrichtung nach einem der vorhergehenden Ansprüche, wobei die Fläche (22) und/oder ein die Fläche (22) umfassender Raum über der Fläche (22) in, insbesondere unterschiedlich klimatisierbare, Kompartimente unterteilt ist.

18. Vorrichtung nach Anspruch 17, wobei die Vorrichtung je Kompartiment einen Portalwagen aufweist.

19. Vorrichtung nach Anspruch 17 oder 18, wobei der Halter (12) von dem Portalwagen eines Kompartiments auf den Portalwagen eines anderen Kompartiments verfahrbar ist.

20. Verfahren zum Trocknen von Trockengut (24) auf einer Fläche (22), wobei das Trockengut (24) mittels zumindest eines auf der Fläche (22) lastenden oder über der Fläche (22) angeordneten Werkzeugs (16) bearbeitet wird, wobei das Werkzeug (16) durch einen damit lösbar verbundenen Halter (12) bewegt wird, welcher in mindestens zwei Koordinaten derart verfahrbar ist, dass das Werkzeug (16) dadurch auf oder über jeden Punkt der Fläche (22) bewegt werden kann, wobei das Werkzeug (16) weniger als halb so breit ist als die kürzeste mögliche durch den Mittelpunkt der Fläche (22) verlaufende Strecke durch die Fläche (22), wobei der Abstand zwischen dem Werkzeug (16) und der Fläche (22) mittels eines Sensors erfasst wird, wobei der Abstand zwischen dem Werkzeug (16) und der Fläche (22) mittels einer an dem Werkzeug (16) oder dem Halter (12) angeordneten Einrichtung oder einer Einrichtung zum Anheben des Werkzeugs (16) in Abhängigkeit des von dem Sensor erfassten Abstands zwischen dem Werkzeug (16) und der Fläche (22) verändert wird.

21. Verfahren nach Anspruch 20, wobei das Werkzeug (16) aus einem Werkzeughalter und mindestens einem damit lösbar verbundenen austauschbaren Werkzeugeinsatz besteht.

22. Verfahren nach Anspruch 21, wobei der Abstand zwischen dem Werkzeugeinsatz und der Fläche (22), insbesondere mittels einer Einrichtung an dem Werkzeughalter, bei Bedarf verändert wird.

23. Verfahren nach Anspruch 21 oder 22, wobei an dem Werkzeughalter ein Aushubmechanismus und eine Werkzeugkopplung vorgesehen sind.

24. Verfahren nach einem der Ansprüche 20 bis 23, wobei der Halter (12) beim Verfahren des Halters (12) im Wesentlichen stets denselben Abstand zur Fläche (22) aufweist.

25. Verfahren nach einem der Ansprüche 20 bis 24, wobei das Werkzeug (16) weniger als viertel so breit ist als die kürzeste mögliche durch den Mittelpunkt der Fläche (22) verlaufende Strecke durch die Fläche (22).

26. Verfahren nach einem der Ansprüche 20 bis 25, wobei das Werkzeug (16) mittels des Halters (12) indirekt, insbesondere durch Schieben oder Ziehen, bewegt wird.

27. Verfahren nach einem der Ansprüche 20 bis 26, wobei der Halter (12) und/oder das Werkzeug (16) eine Aufnahme für eine Zug- oder Schubvorrichtung aufweist.

28. Verfahren nach einem der Ansprüche 20 bis 27, wobei das Trockengut (24) mittels des Werkzeugs (16) bearbeitet wird, indem es mittels mindestens einer funktionellen Komponente des Werkzeugs (16), insbesondere einem Werkzeugeinsatz, gewendet, transportiert, verschoben, belüftet, von Fremdstoffen befreit, beheizt und/oder hygienisiert wird oder indem mittels mindestens einer funktionellen Komponente des Werkzeugs (16) ein Zusatz ausgebracht wird.

29. Verfahren nach einem der Ansprüche 20 bis 28, wobei das Werkzeug (16) um eine senkrecht zur Fläche (22) verlaufende Achse (28) gedreht oder geschwenkt wird.

30. Verfahren nach einem der Ansprüche 20 bis 29, wobei der Sensor an dem Werkzeug (16) vorhandenen ist.

31. Verfahren nach einem der Ansprüche 20 bis 30, wobei der Halter (12) an mindestens einem Portalwagen, einer verfahrbaren Brücke oder einem Rundläufer verfahren wird.

32. Verfahren nach Anspruch 31, wobei der Portalwagen einen, insbesondere im Abstand zur Fläche (22) verstellbaren, Portalträger (11) aufweist und der Halter (12) von dem Portalträger (11) getragen wird.

33. Verfahren nach Anspruch 31 oder 32, wobei der Portalwagen, insbesondere seitlich oder oberhalb der Fläche (22), derart geführt wird, dass ein den Halter (12) tragender Teil des Portalwagens, insbesondere der Portalträger (11), oberhalb der Fläche (22) verfahrbar ist.

34. Verfahren nach einem der Ansprüche 20 bis 33, wobei sich der Halter (12) selbstständig wahlweise mit verschiedenen Werkzeugen (16) verbindet, sich der Werkzeughalter selbstständig wahlweise mit verschiedenen Werkzeugeinsätzen verbindet oder das Werkzeug (16) selbstständig einen Zusatz aus einem Vorrat mindestens eines Zusatzes aufnimmt.

35. Verfahren nach einem der Ansprüche 20 bis 34, wobei es in einem, insbesondere den Treibhauseffekt ausnutzenden, Gebäude durchgeführt wird.

36. Verfahren nach einem der Ansprüche 20 bis 35, wobei die Fläche (22) und/oder ein die Fläche (22) umfassender Raum über der Fläche (22) in, insbesondere unterschiedlich klimatisierbare, Kompartimente unterteilt ist.

37. Verfahren nach Anspruch 36, wobei das Trockengut (24) in mehreren Kompartimenten mittels des Werkzeugs (16) bearbeitet wird.

38. Verfahren nach Anspruch 36 oder 37, wobei je Kompartiment ein Portalwagen verwendet wird.

39. Verfahren nach einem der Ansprüche 36 bis 38, wobei der Halter (12) von dem Portalwagen eines Kompartiments auf den Portalwagen eines anderen Kompartiments verfahren wird.

## Claims

1. Device for drying goods (24) to be dried on a surface (22) of the device, wherein at least one tool (16) which bears on the surface (22) or is disposed above the surface (22) is releasably connected to a holder (12), wherein the holder (12) is displaceable in at least two coordinates in such a manner that, on account thereof, the tool (16) can be moved onto or above any point of the surface (22), wherein the tool (16) is less than half as wide as the shortest possible line through the surface (22), running through the centre of the surface (22), wherein the device has a sensor for detecting the spacing between the tool (16) and the surface (22), wherein the spacing between the tool (16) and the surface (22) is modified by means of an installation which is disposed on the tool (16) or the holder (12), or an installation for raising the tool (16) depending on the spacing between the tool (16) and the surface (22) which has been detected by the sensor.

2. Device according to Claim 1, wherein the tool (16) is composed of a tool holder and at least one exchangeable tool insert which is releasably connected thereto.

3. Device according to Claim 2, wherein the spacing between the tool insert and the surface (22) can be modified in particular by means of an installation on the tool holder.

4. Device according to Claim 2 or 3, wherein a lifting mechanism and a tool coupling are provided on the tool holder.

5. Device according to one of the preceding claims, wherein the holder (12) is displaceable in such a manner that said holder (12) substantially always has the same spacing from the surface (22).

6. Device according to one of the preceding claims, wherein the tool (16) is less than one quarter as wide as the shortest possible line through the surface (22), running through the centre of the surface (22).

7. Device according to one of the preceding claims, wherein the holder (12) is indirectly connected to the tool (16), in particular by way of at least one traction or propulsion device.

8. Device according to one of the preceding claims, wherein the holder (12) and/or the tool (16) have/has a receptacle for the traction or propulsion device.

9. Device according to one of the preceding claims, wherein the tool (16) has at least one functional component, in particular a tool insert, for turning over, conveying, displacing, ventilating, heating and/or sanitizing the goods (24) to be dried, for separating foreign matter, for deploying an additive and/or for cleaning the surface (22).

10. Device according to one of the preceding claims, wherein the tool (16) is rotatable or pivotable about an axis (28) which runs perpendicularly to the surface (22).

11. Device according to one of the preceding claims, wherein the device has the sensor on the tool (16).

12. Device according to one of the preceding claims, wherein the device has at least one portal carriage, one displaceable bridge or a carousel-type machine, on which the holder (12) is displaceably disposed.

13. Device according to Claim 12, wherein the portal carriage has a running gear (10, 10') and a portal support (11) supporting the holder (12) and, in particular, is readjustable in its spacing from the surface (22).

14. Device according to Claim 12 or 13, wherein the portal carriage, in particular laterally or above the surface (22), is guided in such a manner that a part of the portal carriage supporting the holder (12), in particular the portal support (11) is displaceable above the surface (22).

15. Device according to one of the preceding claims, wherein the device has various tools (16) to which the holder (12) can selectively connect in a self-acting manner, has various tool inserts to which the tool holder can selectively connect in a self-acting manner, or has a stock of at least one additive from which the tool (16) can pick-up the additive in a self-acting manner.

16. Device according to one of the preceding claims, wherein the device is disposed in a building, in particular a building exploiting the greenhouse effect.

17. Device according to one of the preceding claims, wherein the surface (22) and/or a space above the surface (22), comprising the surface (22), is subdivided into compartments, in particular compartments which are climate-controllable in various manners.

18. Device according to Claim 17, wherein the device displays one portal carriage per compartment.

19. Device according to Claim 17 or 18, wherein the holder (12) is displaceable from the portal carriage of one compartment onto the portal carriage of another compartment.

20. Method for drying goods (24) to be dried on a surface (22), wherein the goods (24) to be dried are processed by means of at least one tool (16) which bears on the surface (22) or is disposed above the surface (22), wherein the tool (16) is moved by a holder (12) which is releasably connected thereto and which is displaceable in at least two coordinates in such a manner that, on account thereof, the tool (16) can be moved onto or above any point of the surface (22), wherein the tool (16) is less than half as wide as the shortest possible line through the surface (22), running through the centre of the surface (22), wherein the spacing between the tool (16) and the surface (22) is detected by means of a sensor, wherein the spacing between the tool (16) and the surface (22) is modified by means of an installation which is disposed on the tool (16) or the holder (12), or an installation for raising the tool (16) depending on the spacing between the tool (16) and the surface (22) which has been detected by the sensor.

21. Method according to Claim 20, wherein the tool (16) is composed of a tool holder and at least one exchangeable tool insert which is releasably connected thereto.

22. Method according to Claim 21, wherein, if and when required, the spacing between the tool insert and the surface (22) can be modified, in particular by means of an installation on the tool holder.

23. Method according to Claim 21 or 22, wherein a lifting mechanism and a tool coupling are provided on the tool holder.

24. Method according to one of Claims 20 to 23, wherein the holder (12) substantially always has the same spacing from the surface (22) when the holder (12) is displaced.

25. Method according to one of Claims 20 to 24, wherein the tool (16) is less than one quarter as wide as the shortest possible line through the surface (22), running through the centre of the surface (22).

26. Method according to one of Claims 20 to 25, wherein the tool (16) is indirectly moved by means of the holder (12), in particular by propulsion or traction.

27. Method according to one of Claims 20 to 26, wherein the holder (12) and/or the tool (16) have/has a receptacle for a traction or propulsion device.

28. Method according to one of Claims 20 to 27, wherein the goods (24) to be dried are processed by means of the tool (16), in that said goods (24) to be dried are turned over, conveyed, displaced, ventilated, disburdened of foreign matter, heated and/or sanitized by means of at least one functional component of the tool (16), in particular of a tool insert, or in that an additive is deployed by means of at least one functional component of the tool (16).

29. Method according to one of Claims 20 to 28, wherein the tool (16) is rotated or pivoted about an axis (28) which runs perpendicular to the surface (22).

30. Method according to one of Claims 20 to 29, wherein the sensor is present on the tool (16).

31. Method according to one of Claims 20 to 30, wherein the holder (12) is displaced on at least one portal carriage, a displaceable bridge, or a carousel-type machine.

32. Method according to Claim 31, wherein the portal carriage has a portal support (11) which is readjustable in particular in its spacing from the surface (22), and the holder (12) is supported by the portal support (11).

33. Method according to Claim 31 or 32, wherein the portal carriage is guided, in particular laterally or above the surface (22) in such a manner that a part of the portal carriage supporting the holder (12), in particular the portal support (11), is displaceable above the surface (22).

34. Method according to one of Claims 20 to 33, wherein the holder (12) selectively connects in a self-acting manner to various tools (16), the tool holder selectively connects in a self-acting manner to various tool inserts, or the tool (16) picks-up in a self-acting manner an additive from a stock of at least one additive.

35. Method according to one of Claims 20 to 34, wherein said method is executed in a building, in particular a building exploiting the greenhouse effect.

36. Method according to one of Claims 20 to 35, wherein the surface (22) and/or a space above the surface (22), comprising the surface (22), is subdivided into compartments, in particular compartments which are climate-controllable in various manners.

37. Method according to Claim 36, wherein the goods (24) to be dried are processed by means of the tool (16) in a plurality of compartments.

38. Method according to Claim 36 or 37, wherein one portal carriage is used per compartment.

39. Method according to one of Claims 36 to 38, wherein the holder (12) is displaced from the portal carriage of one compartment onto the portal carriage of another compartment.

## Revendications

1. Dispositif de séchage de produit à sécher (24) sur une surface (22) du dispositif, dans lequel au moins un outil (16) pesant sur la surface (22) ou disposé au-dessus de la surface (22) est relié à un support (12) de manière amovible, dans lequel le support (12) peut être déplacé dans au moins deux coordonnées de telle sorte que l'outil (16) peut être déplacé de ce fait sur ou au-dessus de chaque point de la surface (22), dans lequel l'outil (16) fait moins de la moitié de large que la distance la plus courte possible s'étendant à travers le point médian de la surface (22) à travers la surface (22), dans lequel le dispositif présente un capteur pour détecter l'écart entre l'outil (16) et la surface (22), dans lequel l'écart entre l'outil (16) et la surface (22) est modifié au moyen d'une installation disposée sur l'outil (16) ou le support (12) ou d'une installation pour soulever l'outil (16) en fonction de l'écart détecté par le capteur entre l'outil (16) et la surface (22).

2. Dispositif selon la revendication 1, dans lequel l'outil (16) se compose d'un porte-outil et d'au moins un insert d'outil permutable, relié à celui-ci de manière amovible.

3. Dispositif selon la revendication 2, dans lequel l'écart entre l'insert d'outil et la surface (22) peut être modifié, notamment au moyen d'une installation sur le porte-outil.

4. Dispositif selon la revendication 2 ou 3, dans lequel un mécanisme de relevage et un raccord d'outil sont prévus sur le porte-outil.

5. Dispositif selon une des revendications précédentes, dans lequel le support (12) peut être déplacé de telle sorte qu'il présente essentiellement toujours le même écart par rapport à la surface (22).

6. Dispositif selon une des revendications précédentes, dans lequel l'outil (16) fait moins d'un quart de large que la distance la plus courte possible s'étendant à travers le point médian de la surface (22) à travers la surface (22).

7. Dispositif selon une des revendications précédentes, dans lequel le support (12) est relié indirectement à l'outil (16), notamment par le biais d'au moins un dispositif de traction ou de poussée.

8. Dispositif selon une des revendications précédentes, dans lequel le support (12) et/ou l'outil (16) présente un logement pour le dispositif de traction ou de poussée.

9. Dispositif selon une des revendications précédentes, dans lequel l'outil (16) présente au moins un composant fonctionnel, notamment un insert d'outil, pour tourner, transporter, faire coulisser, aérer, chauffer et/ou assainir le produit à sécher (24), pour trier des substances étrangères, pour épandre un additif et/ou pour nettoyer la surface (22).

10. Dispositif selon une des revendications précédentes, dans lequel l'outil (16) peut être tourné ou pivoté autour d'un axe (28) s'étendant perpendiculairement à la surface (22).

11. Dispositif selon une des revendications précédentes, dans lequel le dispositif présente le capteur sur l'outil (16).

12. Dispositif selon une des revendications précédentes, dans lequel le dispositif présente au moins un chariot portique, un pont mobile ou une machine de type carrousel sur lequel ou laquelle le support (12) est disposé de manière à pouvoir être déplacé.

13. Dispositif selon la revendication 12, dans lequel le chariot portique présente au moins un châssis (10, 10') et un support portique (11) réglable notamment à distance de la surface (22), portant le support (12).

14. Dispositif selon la revendication 12 ou 13, dans lequel le chariot portique est guidé, notamment latéralement ou audessus de la surface (22), de telle sorte qu'une partie du chariot portique portant le support (12), notamment le support portique (11), peut être déplacée au-dessus de la surface (22).

15. Dispositif selon une des revendications précédentes, dans lequel le dispositif présente différents outils (16) auxquels le support (12) peut se connecter automatiquement au choix, présente différents inserts d'outil auxquels le porte-outil peut se connecter automatiquement au choix ou présente une réserve d'au moins un additif de laquelle l'outil (16) peut ramasser automatiquement l'additif.

16. Dispositif selon une des revendications précédentes, dans lequel le dispositif est disposé dans un bâtiment, exploitant notamment l'effet de serre.

17. Dispositif selon une des revendications précédentes, dans lequel la surface (22) et/ou un espace comprenant la surface (22) au-dessus de la surface (22) est divisé(e) en compartiments, pouvant notamment être climatisés différemment.

18. Dispositif selon la revendication 17, dans lequel le dispositif présente un chariot portique par compartiment.

19. Dispositif selon la revendication 17 ou 18, dans lequel le support (12) peut être déplacé du chariot portique d'un compartiment sur le chariot portique d'un autre compartiment.

20. Procédé de séchage de produit à sécher (24) sur une surface (22), dans lequel le produit à sécher (24) est usiné au moyen d'au moins un outil (16) pesant sur la surface (22) ou disposé au-dessus de la surface (22), dans lequel l'outil (16) est déplacé par un support (12) relié à lui de manière amovible qui peut être déplacé dans au moins deux coordonnées de telle sorte que l'outil (16) peut être déplacé de ce fait sur ou au-dessus de chaque point de la surface (22), dans lequel l'outil (16) fait moins de la moitié de large que la distance la plus courte possible s'étendant à travers le point médian de la surface (22) à travers la surface (22), dans lequel l'écart entre l'outil (16) et la surface (22) est détecté au moyen d'un capteur, dans lequel l'écart entre l'outil (16) et la surface (22) est modifié au moyen d'une installation disposée sur l'outil (16) ou le support (12) ou d'une installation pour soulever l'outil (16) en fonction de l'écart détecté par le capteur entre l'outil (16) et la surface (22).

21. Procédé selon la revendication 20, dans lequel l'outil (16) se compose d'un porte-outil et d'au moins un insert d'outil permutable, relié à celui-ci de manière amovible.

22. Procédé selon la revendication 21, dans lequel l'écart entre l'insert d'outil et la surface (22) peut être modifié le cas échéant, notamment au moyen d'une installation sur le porte-outil.

23. Procédé selon la revendication 21 ou 22, dans lequel un mécanisme de relevage et un raccord d'outil sont prévus sur le porte-outil.

24. Procédé selon une des revendications 20 à 23, dans lequel le support (12) présente essentiellement toujours le même écart par rapport à la surface (22) lors du déplacement du support (12).

25. Procédé selon une des revendications 20 à 24, dans lequel l'outil (16) fait moins d'un quart de large que la distance la plus courte possible s'étendant à travers le point médian de la surface (22) à travers la surface (22).

26. Procédé selon une des revendications 20 à 25, dans lequel l'outil (16) est déplacé indirectement au moyen du support (12), notamment par poussée ou traction.

27. Procédé selon une des revendications 20 à 26, dans lequel le support (12) et/ou l'outil (16) présente un logement pour le dispositif de traction ou de poussée.

28. Procédé selon une des revendications 20 à 27, dans lequel le produit à sécher (24) est usiné au moyen de l'outil (16) en ce qu'il est tourné, transporté, coulissé, aéré, libéré de substances étrangères, chauffé et/ou assaini au moyen d'au moins un composant fonctionnel de l'outil (16), notamment un insert d'outil ou en ce qu'un additif est épandu au moyen d'au moins un composant fonctionnel de l'outil (16).

29. Procédé selon une des revendications 20 à 28, dans lequel l'outil (16) est tourné ou pivoté autour d'un axe (28) s'étendant perpendiculairement à la surface (22).

30. Procédé selon une des revendications 20 à 29, dans lequel le capteur est présent sur l'outil (16).

31. Procédé selon une des revendications 20 à 30, dans lequel le support (12) est déplacé sur au moins un chariot portique, un pont mobile ou une machine de type carrousel.

32. Procédé selon la revendication 31, dans lequel le chariot portique présente un support portique (11), réglable notamment à distance de la surface (22), et le support (12) est porté par le support portique (11).

33. Procédé selon la revendication 31 ou 32, dans lequel le chariot portique est guidé, notamment latéralement ou audessus de la surface (22), de telle sorte qu'une partie du chariot portique portant le support (12), notamment le support portique (11), peut être déplacée au-dessus de la surface (22).

34. Procédé selon une des revendications 20 à 33, dans lequel le support (12) se connecte automatiquement au choix à différents outils (16), le porte-outil se connecte automatiquement au choix à différents inserts d'outil ou l'outil (16) ramasse automatiquement un additif provenant d'une réserve d'au moins un additif.

35. Procédé selon une des revendications 20 à 34, dans lequel il est effectué dans un bâtiment, exploitant notamment l'effet de serre.

36. Procédé selon une des revendications 20 à 35, dans lequel la surface (22) et/ou un espace comprenant la surface (22) au-dessus de la surface (22) est divisé(e) en compartiments, pouvant notamment être climatisés différemment.

37. Procédé selon la revendication 36, dans lequel le produit à sécher (24) est usiné dans plusieurs compartiments au moyen de l'outil (16).

38. Procédé selon la revendication 36 ou 37, dans lequel un chariot portique est utilisé par compartiment.

39. Procédé selon une des revendications 36 à 38, dans lequel le support (12) est déplacé du chariot portique d'un compartiment sur le chariot portique d'un autre compartiment.
